# EUROPEAN PATENT SPECIFICATION

(11) **EP 3 051 644 B1**
(45) Date of publication and mention of the grant of the patent: **02.10.2019**
(21) Application number: 15153343.7
(22) Date of filing: 30.01.2015
(51) Int. Cl.: H02H 3/247, H02H 3/24, H01H 83/12, H01H 47/32

(54) **Undervoltage-release circuit of operating-mechanism for tripping a voltage circuit-breaker**
Unterspannungsauslöseschaltung eines Betriebsmechanismus zum Auslösen eines Spannungsschutzschalters
Circuit de bobine à minimum de tension d'un mécanisme de déclenchement d'un disjoncteur

(43) Date of publication of application: 03.08.2016
(73) Proprietor: General Electric Technology GmbH, 5400 Baden (CH)
(72) Inventor: VON ALLMEN, Peter, 5054 Kirchleerau (CH)
(74) Representative: Rüger Abel Patentanwälte PartGmbB

(56) References cited:
- GB-A- 2 033 177
- US-A- 4 331 996
- US-A1- 2004 190 211

## Description

### Technical field and prior art

The invention relates to an undervoltage release circuit of an operating mechanism for tripping a voltage circuit breaker and to an operating-mechanism for tripping a voltage circuit-breaker which comprises an undervoltage release circuit according to the invention.

GB 2 033 177 A discloses an undervoltage release circuit according to the preamble of claim 1.

The energy to trip a circuit-breaker is stored in a spring (spring-operated mechanism) or in a hydraulic tank (hydraulic-operated mechanism). The spring is held in its charged position using a latching-system, while the hydraulic tank is kept under pressure by a closed valve. To trip the circuit-breaker, the latching-system or the valve is opened either manually or by an electromagnetic solenoid (coil).

It is sometimes required a special equipment called "undervoltage-release circuit" to trip the circuit-breaker in case the control-voltage drops under a certain voltage level. As known by the man skilled in the art, the "control-voltage" is the power-supply with which the substation which contains the circuit-breaker is controlled (all mechanisms, protection relays, position indicators, etc. are activated by the control-voltage).

The tripping of the circuit-breaker is then specified as follows:
- The undervoltage-release circuit does not trip the circuit-breaker as long as the control-voltage is higher than 70% of rated voltage;
- The undervoltage-release circuit must trip the circuit-breaker if the control-voltage is lower than 35% the rated voltage.

Furthermore, a reclosing must be possible as soon as the control-voltage is minimum 85% of rated voltage.

In some operating-mechanisms of the prior art, linear solenoids are used to realize the undervoltage-release function. The solenoid acts against a spring and is connected to a trip-latch. As long as the control-voltage is high enough, the solenoid holds the spring in charged position. When the control-voltage drops, the magnetic force of the solenoid gets weaker so it cannot hold the spring in its charged position. Thus, the spring discharges and trips the circuit-breaker.

The main problem of such an electromagnetic system is to find the balance between the magnetic force induced by the solenoid and the force of the spring, especially when working under low or high temperatures. Due to the temperature-coefficient of the copper-windings of the solenoid, the magnetic force induced by the solenoid is depending on the temperature. Another problem is that the force induced by the solenoid is a very non linear force, while the force of the spring is a linear force.

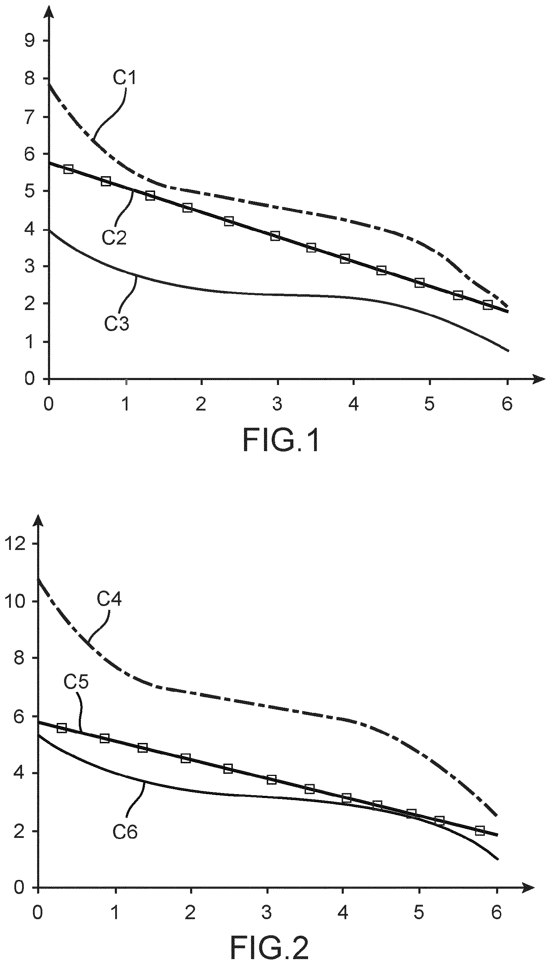

The Figure 1 represents the force induced by the solenoid and the force of the spring, in accordance with the stroke of both the solenoid and the spring, at room temperature (20°C), according to the prior art.

The curve C1 represents the solenoid force at 70% rated voltage and the curve C3 represents the solenoid force at 35% rated voltage. The curve C2 represents the spring force. On the abscissa scale, the point "0" represents the solenoid pulled and the spring charged and the point "6" represents the solenoid released and the spring discharged.

The magnet force is higher than the spring force over the whole stroke as long as the control-voltage is 70% of rated voltage or higher. This means that the system stays at a position where the solenoid is pulled and the spring charged. If the control-voltage is at 35% of rated voltage or lower, the spring force is higher than the solenoid force over the complete stroke, which means that the sytem moves to the released, discharged position so that the circuit-breaker is tripped.

The Figure 2 represents the force induced by the solenoid and the force of the spring, in accordance with the stroke of both the solenoid and the spring, at minimum temperature, for example -40°C, according to the prior art.

The curve C4 represents the solenoid force at 70% rated voltage and the curve C6 represents the solenoid force at 35% rated voltage. The curve C5 represents the spring force. The force induced by the solenoid at 35% rated voltage is only slightly lower than the spring force. After a certain stroke, both forces are equal. This means that the system starts to move and, most probably, stops at stroke 5 and the circuit-breaker is not tripped. Otherwise, as long as the control-voltage is 70% of rated voltage or higher, the magnet force is higher than the spring force over the whole stroke so that the system stays at a position where the solenoid is pulled and the spring charged.

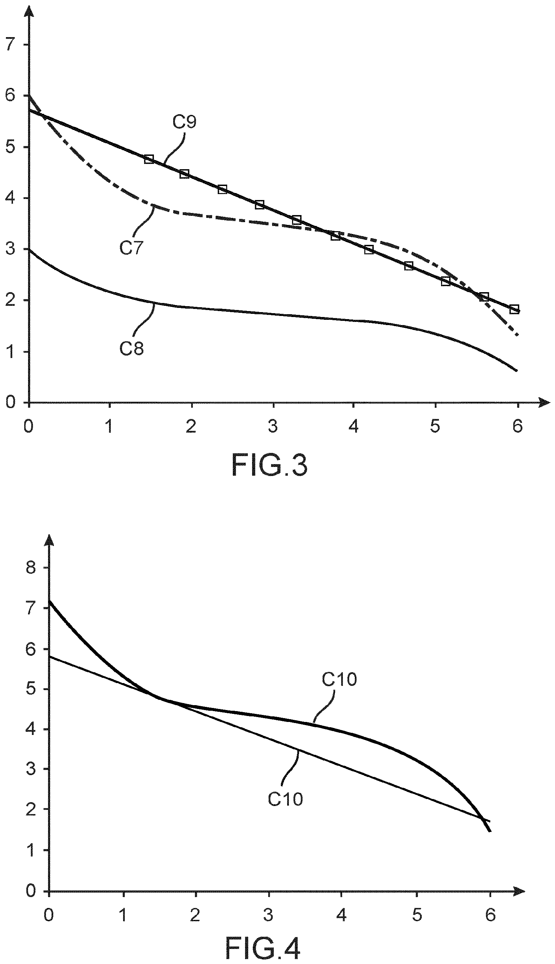

The Figure 3 represents the force induced by the solenoid and the force of the spring, in accordance with the stroke of both the solenoid and the spring, at maximum temperature, for example +50°C, according to the prior art.

The curve C7 represents the solenoid force at 70% of rated voltage and the curve C8 represents the solenoid force at 35% of rated voltage. The curve C9 represents the spring force. Even at 70% of rated voltage, the force induced by the solenoid is partially lower that the spring force. This means that the circuit-breaker could trip even at 70% of rated voltage.

The Figure 4 represents the force induced by the solenoid at 85% of rated voltage (curve C10) and the force of the spring (curve C11), in accordance with the stroke of both the solenoid and the spring, at maximum temperature, for example +50°C, according to the prior art.

This diagram shows the problem of recharging the spring at 85% of the rated voltage. At 85% of the rated voltage, it must be possible to close the circuit-breaker which means that the solenoid must be able to move the spring from its discharged to its charged position. The solenoid force is partially higher or equal to the spring force. The solenoid cannot charge the spring completely so that the closing of the circuit-breaker is not possible.

All the above Figures 1-4 show that it is not possible to find a solenoid and a spring that work correctly under all conditions. If the force induced by the solenoid is big enough (i.e. the solenoid is big enough) to fulfill the condition "charge the spring at 85% of the rated voltage", then the condition "trip the circuit-breaker (i.e. release the spring) at less than 35% of the rated voltage" cannot be fulfilled. If the solenoid has less force (smaller solenoid) so that the condition "trip the circuit-breaker at less than 35% of the rated voltage" can be fulfilled, then the condition "charge the spring at 85% of the rated voltage" cannot be fulfilled.

According to the prior art, several solutions are known to overcome all or part of the above mentioned drawbacks. These solutions are:
- using only the quasi-linear part of the stroke of the solenoid (this causes a bigger solenoid to have enough energy to charge the spring);
- using additional mechanical system that recharges the spring while tripping the circuit-breaker (doing so avoids the problem of recharging at 85%);
- using a special non linear spring or a cam-sytem to get a desired nonlinearity.

All these systems use complicated additional mechanisms and/or very big solenoids, which increases both the size and the cost of the operating-mechanism.

The invention does not have such drawbacks.

### Presentation of the invention

Indeed, the invention relates to an undervoltage release circuit comprising a solenoid and a spring, the solenoid acting against the spring and being connected to a trip-latch which trips a circuit-breaker as soon as a control voltage drops under a voltage level, characterized in that it comprises a voltage determining device and a switching element controlled by a command signal, the switching element being connected in series with the solenoid, the voltage determining device comprising means for measuring the control-voltage and means for generating a signal according to the control voltage measured, the signal generated according to the control voltage measured constituting the command signal so that the switching element is closed when the control voltage measured is equal or higher than the voltage level and opened as soon as the control voltage is less than the voltage level.

According to a another characteristic of the invention, the voltage determining device comprises a diode in series with a first resistor and a second resistor and the switching element is made of a transistor, the diode having an anode and a cathode, the first resistor having a first terminal and a second terminal, the second resistor having a first terminal and a second terminal and the transitor having a gate, a drain and a source, the first terminal of the first resistor being connected to the anode of the diode and to the gate of the transistor, the second terminal of the first resistor being connected to the second terminal of the undervoltage release circuit and to the drain of the transistor, the first terminal of the second resistor being connected to the first terminal of the undervoltage release circuit and to a first terminal of the solenoid, the second terminal of the second resistor being connected to the cathode of the diode, the source of the transistor being connected to a second terminal of the solenoid.

The invention also relates to an operating mechanism for tripping a voltage circuit-breaker, the operating mechanism comprising an undervoltage release circuit to trip the circuit-breaker if a control voltage drops under a voltage level, characterized in that the undervoltage release circuit is as circuit according to the invention.

### Brief description of the drawings

Other characteristics and advantages of the invention will become clearer upon reading a preferred embodiment of the invention made in reference to the attached figures, wherein:
- The Figures 1-4 - already described - represent a comparison between the force induced by a solenoid and the force of a spring, in different conditions, according to the prior art;
- The Figure 5 represents a diagram of an undervoltage-release circuit of operating-mechanism for circuit-breaker according to the invention;
- The Figure 6 represents an example of the undervoltage-release circuit of operating-mechanism for circuit-breaker represented in Figure 5;
- The figure 7 represents an improvement of the undervoltage-release circuit represented in Figure 5;
- The figure 8 represents an example of undervoltage-release circuit of operating-mechanism which uses a plurality of undervoltage-release circuits as the one shown in Figure 7.

In all the figures, the same references designate the same elements.

### Detailed description of the invention

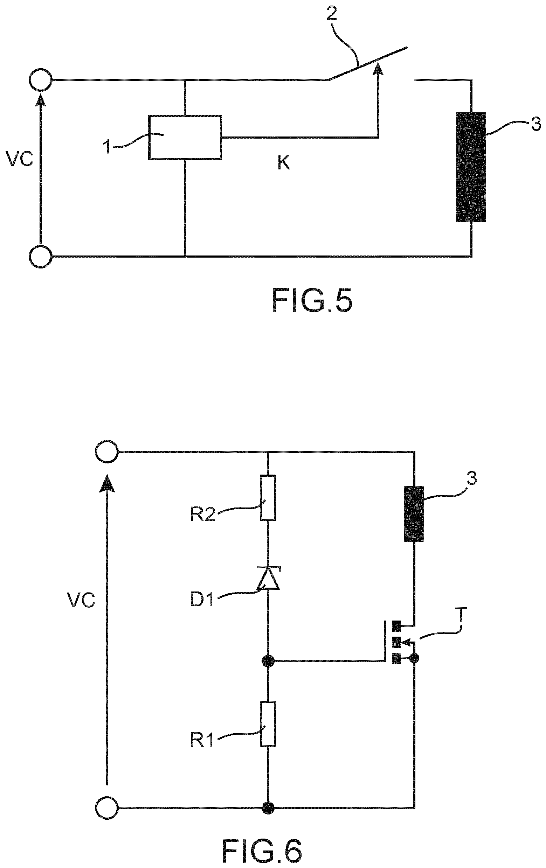

The Figure 5 represents a diagram of an undervoltage-release circuit of operating-mechanism for circuit-breaker according to the invention.

The undervoltage-release circuit comprises a voltage determining device 1, a switch 2, a solenoid 3 and a spring. The spring is not represented in Figure 5 because the representation of the spring is not useful for the understanding of the invention.

The switch 2 is in series with the solenoid 3 and the voltage determining device 1 is in parallel with the set constituted by the switch 2 in series with the solenoid 3. The control-voltage VC is applied between the terminals of the voltage determining device 1.

The voltage determining device 1 measures the control voltage VC and outputs a signal K which a function of the control voltage measured. The signal K constitutes the command signal of the switch 2.

When the control voltage VC is equal to the rated voltage, the signal K commands the switch 2 in its closed position and a current flows through the solenoid 3. The spring (not represented) stays in the charged position.

As soon as the control voltage VC drops to a voltage level less than 70% of the rated voltage, for example a value equal to 50% of the rated voltage, the signal K commands the switch 2 so that the switch 2 is put in its opened position. There is no more current in the solenoid 3. Therefore, the solenoid 3 cannot keep the spring in the charged position and the circuit-breaker is tripped.

An advantage of the invention - in comparison with the prior art - is that there is no more need to find a balance between the magnetic force induced by the solenoid and the force of the spring so that the conditions (1) and (2) below are obtained:
(1) the magnetic force induced by the solenoid is big enough to fulfill the condition "charge the spring at 85% of the rated voltage" or "keep the spring charged at 70% of the rated voltage when temperature is maximum", and
(2) the magnetic force induced by the solenoid is small enough to fulfill the condition "trip the circuit breaker (i.e. release the spring) at less than 35% of the rated voltage".

With the device of the invention, the only condition to realise is to choose a solenoid big enough so that its magnetic force is big enough too. Advantegeously, this condition is very easy to realise with standard solenoids (solenoids bought in the market).

The Figure 6 represents an example of the undervoltage-release circuit of operating-mechanism for circuit-breaker represented in Figure 5.

The voltage determining device 1 is made of a Zener diode D1 and two resistors R1 and R2 in series with the Zener diode. The switch 2 is made of a field effect transistor T, for example a power MOSFET. The resistor R1 has a first terminal connected to the anode of the Zener diode D1 and to the gate of the field effect transistor T, the second terminal of the resistor R1 being connected to the source of the field effect transistor T. The second resistor R2 has a first terminal connected to a first terminal of the solenoid 3, the second terminal of which is connected to the drain of the field effect transistor T. The second terminal of the resistor R2 is connected to the cathode of the Zener diode D1. The control-voltage VC is applied between the first terminal of the resistor R2 and the second terminal of the resistor R1.

As long as the control-voltage VC is higher than the Z-voltage of the diode D1, the gate of the transistor T is charged and a current flows through the solenoid 3. As soon as the control-voltage gets lower than the Z-voltage of the diode D1, the gate of the transistor T gets discharged through the resistor R1 and the transistor T interrupts the current through the solenoid.

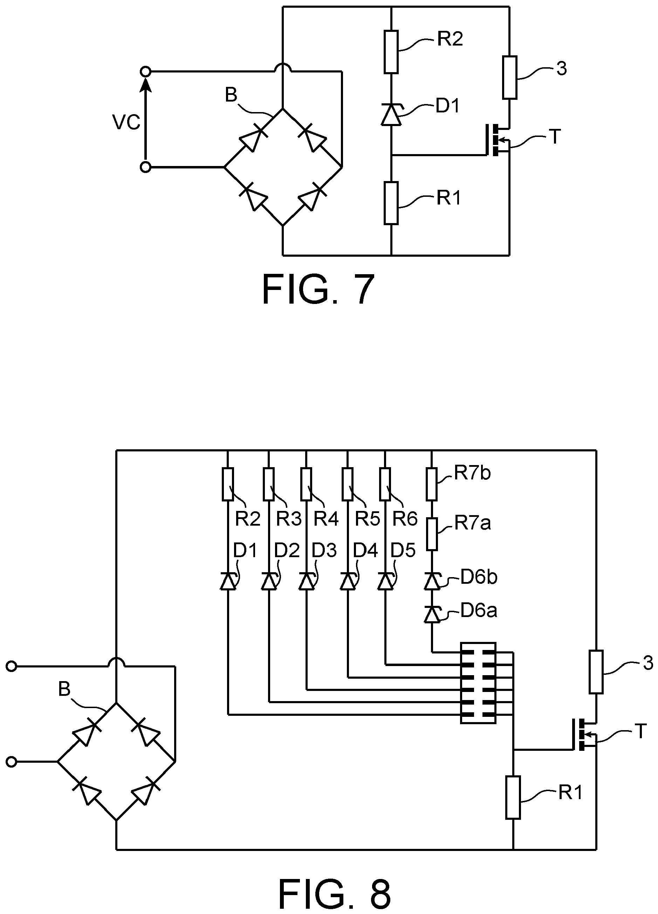

The figure 7 represents an improvement of the undervoltage-release circuit represented in Figure 5.

In addition to the elements represented in Figure 6, the circuit represented in Figure 7 comprises a rectifier B placed at the input of the undervoltage release circuit. This rectifier makes advantageously the circuit independent of polarity and suitable for active current AC and direct current DC.

The figure 8 represents an example of undervoltage-release circuit of operating-mechanism which uses a plurality of undervoltage-release circuits as the one shown in Figure 7.

In addition to the elements represented in Figure 7, the voltage determining device of Figure 8 comprises a 6 way switching controller 4 having one input and six outputs and six branches comprising each at least one Zener diode in series with at least one resistor. Each branch is palced between a different output of the 6 way switching controller and the first terminal of the solenoid. As an example, each branch among five branches comprise a diode Di (i=1, 2, 3, 4, 5) and a resistor Ri (i=1, 2, 3, 4, 5) and the sixth branch comprises two Zener diodes D6a, D6b and two resistors R6a, R6b. The 6 way controller 4 allows to connect the gate of the transistor T to anyone of the six branches. The resistors Ri (i=1, 2, 3, 4, 5) have different values. This allows to get different values of voltage levels to which the control-voltage may be compared.

With the example of Figure 8, the voltage determining device comprises a 6 way switching controller and six branches. More generally, the voltage determining device of the undervoltage-release circuit of the invention comprises a N way switching controller and N branches.

## Claims

1. Undervoltage release circuit comprising a solenoid (3), a spring, a voltage determining device (1) and a switching element (2), the voltage determining device (1) comprising means for measuring the control-voltage and means for generating a signal (K) according to the control voltage measured, the solenoid (3) acting against the spring and being connected to a trip-latch which trips a circuit-breaker as soon as a control voltage drops under a voltage level, **characterized in that** the switching element (2) is controlled by a command signal, the switching element (2) being connected in series with the solenoid (3), the signal (K) according to the control voltage measured constituting the command signal (K) so that the switching element (2) is closed when the control voltage measured is equal or higher than the voltage level and opened as soon as the control voltage is less than the voltage level.

2. Undervoltage release circuit according to claim 1, wherein the voltage level is between 40% and 60% of the control voltage.

3. Undervoltage release circuit according to claim 1 or 2, wherein the voltage determining device (1) comprises a diode (D1) in series with a first resistor (R1) and a second resistor (R2) and the switching element (2) is made of a transistor (T), the diode having an anode and a cathode, the first resistor (R1) having a first terminal and a second terminal, the second resistor (R2) having a first terminal and a second terminal and the transitor (2) having a gate, a drain and a source, the first terminal of the first resistor (R1) being connected to the anode of the diode (D1) and to the gate of the transistor (2), the second terminal of the first resistor being connected to the second terminal of the undervoltage release circuit and to the drain of the transistor, the first terminal of the second resistor (R2) being connected to the first terminal of the undervoltage release circuit and to a first terminal of the solenoid (3), the second terminal of the second resistor (R2) being connected to the cathode of the diode (D1), the source of the transistor being connected to a second terminal of the solenoid (3) .

4. Undervoltage release circuit according to claim 1 or 2, wherein the voltage determining device (1) comprises N branches comprising each at least one diode (D1, D2, D3, D4, D5, D6a, D6b) in series with at least one first resistor (R2, R3, R4, R5, R6, R7a, R7b), N being an integer equal or higher than 2, and a N way switching controller (4) having one input and N outputs, the switching element (2) being made of a transistor having a gate, a drain and a source, each branch comprising a first terminal which is the anode of the diode and a second terminal which is a terminal of a second resistor, the input of the N way switching controller (4) being connected to first terminal of the first resistor and each output of the N outputs being connected to the first terminal of a different branch, the second terminals of the N branches being connected together to a first terminal of the undervoltage release circuit and to a first terminal of the solenoid (3), the input terminal of the N way switching controller (4) being connected to the gate of the transistor and to a first terminal of a second resistor, the second terminal of which is connected to a second terminal of the undervoltage release circuit and to the source of the transistor, the drain of which is connected to a second terminal of the solenoid.

5. Operating mechanism for tripping a voltage circuit-breaker, the operating mechanism comprising an undervoltage release circuit to trip the circuit-breaker if a control voltage drops under a voltage level, **characterized in that** the undervoltage release circuit is as circuit according to any claim 1-4.

## Patentansprüche

1. Unterspannungsauslöseschaltkreis aufweisend eine Spule (3), eine Feder, eine Spannungsbestimmungseinrichtung (1) und ein Schaltelement (2), wobei die Spannungsbestimmungseinrichtung (1) ein Mittel zum Messen der Steuerspannung und ein Mittel zur Erzeugung eines Signals (K) entsprechend der gemessenen Steuerspannung aufweist, wobei die Spule (3) gegen die Feder wirkt und mit einem Auslösemechanismus verbunden ist, der einen Trennschalter auslöst, sobald eine Steuerspannung unter ein Spannungsniveau sinkt, **dadurch gekennzeichnet, dass** das Schaltelement (2) durch ein Steuersignal gesteuert ist, das Schaltelement (2) in Reihe mit der Spule (3) geschaltet ist, das Signal (K) entsprechend der gemessenen Steuerspannung das Steuersignal (K) bildet, so dass das Schaltelement (2) geschlossen wird, wenn die gemessene Steuerspannung gleich groß ist wie oder größer ist als das Spannungsniveau, und geöffnet wird, sobald die Steuerspannung geringer ist als das Spannungsniveau.

2. Unterspannungsauslöseschaltkreis nach Anspruch 1, wobei das Spannungsniveau zwischen 40% und 60% der Steuerspannung ist.

3. Unterspannungsauslöseschaltkreis nach Anspruch 1 oder 2, wobei die Spannungsbestimmungseinrichtung (1) eine Diode (D1) in Reihe mit einem ersten Widerstand (R1) und einem zweiten Widerstand (R2) aufweist und das Schaltelement (2) durch einen Transistor (T) gebildet ist, wobei die Diode eine Anode und eine Kathode aufweist, wobei der erste Widerstand (R1) einen ersten Anschluss und einen zweiten Anschluss aufweist, wobei der zweite Widerstand (R2) einen ersten Anschluss und einen zweiten Anschluss aufweist und der Transistor (2) einen Steueranschluss, einen Senkenanschluss und einen Quellenanschluss aufweist, wobei der erste Anschluss des ersten Widerstands (R1) mit der Anode der Diode (D1) und mit dem Steueranschluss des Transistors (2) verbunden ist, wobei der zweite Anschluss des ersten Widerstands mit dem zweiten Anschluss des Unterspannungsauslöseschaltkreises und mit dem Senkenanschluss des Transistors verbunden ist, wobei der erste Anschluss des zweiten Widerstands (R2) mit dem ersten Anschluss des Unterspannungsauslöseschaltkreises und mit einem ersten Anschluss der Spule (3) verbunden ist, wobei der zweite Anschluss des zweiten Widerstands (R2) mit der Kathode der Diode (D1) verbunden ist, wobei der Quellenanschluss des Transistors mit einem zweiten Anschluss der Spule (3) verbunden ist.

4. Unterspannungsauslöseschaltkreis nach Anspruch 1 oder 2, wobei die Spannungsbestimmungseinrichtung (1) N Zweige aufweist, jeweils aufweisend wenigstens eine Diode (D1, D2, D3, D4, D5, D6a, D6b) in Reihe mit wenigstens einem Widerstand (R2, R3, R4, R5, R6, R7a, R7b), wobei N eine ganze Zahl gleich oder größer als 2 ist, und eine N-Weg-Schaltsteuerung (4), die einen Eingang und N-Ausgänge aufweist, wobei das Schaltelement (2) von einem Transistor mit einem Steueranschluss, einem Senkenanschluss und einem Quellenanschluss gebildet ist, wobei jeder Zweig einen ersten Anschluss aufweist, der die Anode der Diode ist und einen zweiten Anschluss aufweist, der ein Anschluss eines zweiten Widerstands ist, wobei der Eingang der N-Weg-Schaltsteuerung (4) mit dem ersten Anschluss des ersten Widerstands verbunden ist und jeder Ausgang der N Ausgänge mit dem ersten Anschluss eines anderen Zweigs verbunden ist, wobei die zweiten Anschlüsse der N Zweige miteinander zu einem ersten Anschluss des Unterspannungsauslöseschaltkreises und mit einem ersten Anschluss der Spule (3) verbunden sind, wobei der Eingangsanschluss der N-Weg-Schaltsteuerung (4) mit dem Steueranschluss des Transistors und mit einem ersten Anschluss eines zweiten Widerstands verbunden ist, wobei dessen zweiter Anschluss mit einem zweiten Anschluss des Unterspannungsauslöseschaltkreises und mit dem Quellenanschluss des Transistors verbunden ist, wobei dessen Senkenanschluss mit einem zweiten Anschluss der Spule verbunden ist.

5. Betriebsmechanismus zum Auslösen eines Spannungsschaltkreistrennschalters, wobei der Betriebsmechanismus einen Unterspannungsauslöseschaltkreis zum Auslösen des Trennschalters aufweist, wenn eine Steuerspannung unter ein Spannungsniveau sinkt, **dadurch gekennzeichnet, dass** der Unterspannungsauslöseschaltkreis ein Schaltkreis nach irgendeinem der Ansprüche 1-4 ist.

## Revendications

1. Circuit de libération à sous-tension comprenant un solénoïde (3), un ressort, un dispositif de détermination de tension (1) et un élément de commutation (2), le dispositif de détermination de tension (1) comprenant un moyen pour mesurer la tension de commande et un moyen pour produire un signal (K) selon la tension de commande mesurée, le solénoïde (3) agissant contre le ressort et étant relié à un circuit de déclenchement-verrouillage qui déclenche un disjoncteur aussitôt qu'une tension de commande chute sous un certain niveau de tension, **caractérisé en ce que** l'élément de commutation (2) est commandé par un signal d'ordre, l'élément de commutation (2) étant relié en série au solénoïde (3), le signal (K) selon la tension de commande mesurée constituant le signal d'ordre (K) de sorte que l'élément de commutation (2) est fermé lorsque la tension de commande mesurée est égale ou supérieure au niveau de tension et ouvert aussitôt que la tension de commande est inférieure au niveau de tension.

2. Circuit de libération à sous-tension selon la revendication 1, dans lequel le niveau de tension fait entre 40 % et 60 % de la tension de commande.

3. Circuit de libération à sous-tension selon la revendication 1 ou 2, dans lequel le dispositif de détermination de tension (1) comprend une diode (D1) en série avec une première résistance (R1) et une seconde résistance (R2) et l'élément de commutation (2) est fait d'un transistor (T), la diode ayant une anode et une cathode, la première résistance (R1) ayant une première borne et une seconde borne, la seconde résistance (R2) ayant une première borne et une seconde borne et le transistor (2) ayant une grille, un drain et une source, la première borne de la première résistance (R1) étant reliée à l'anode de la diode (D1) et à la grille du transistor (2), la seconde borne de la première résistance étant reliée à la seconde borne du circuit de libération à sous-tension et au drain du transistor, la première borne de la seconde résistance (R2) étant reliée à la première borne du circuit de libération à sous-tension et à une première borne du solénoïde (3), la seconde borne de la seconde résistance (R2) étant reliée à la cathode de la diode (D1), la source du transistor étant reliée à une seconde borne du solénoïde (3).

4. Circuit de libération à sous-tension selon la revendication 1 ou 2, dans lequel le dispositif de détermination de tension (1) comprend N branches comprenant chacune au moins une diode (D1, D2, D3, D4, D5, D6a, D6b) en série avec au moins une première résistance (R2, R3, R4, R5, R6, R7a, R7b), N étant un entier égal ou supérieur à 2, et une unité de commande de commutation à N voies (4) ayant une seule entrée et N sorties, l'élément de commutation (2) étant fait d'un transistor ayant une grille, un drain et une source, chaque branche comprenant une première borne qui est l'anode de la diode et une seconde borne qui est une borne d'une seconde résistance, l'entrée de l'unité de commande de commutation à N voies (4) étant reliée à la première borne de la première résistance et chaque sortie des N sorties étant reliée à la première borne d'une branche différente, les secondes bornes des N branches étant reliées ensemble à une première borne du circuit de libération à sous-tension, et à une première borne du solénoïde (3), la borne d'entrée de l'unité de commande de commutation à N voies (4) étant reliée à la grille du transistor et à une première borne d'une seconde résistance, dont la seconde borne est reliée à une seconde borne du circuit de libération à sous-tension et à la source du transistor, dont le drain est relié à une seconde borne du solénoïde.

5. Mécanisme de mise en oeuvre pour déclencher un disjoncteur de tension, le mécanisme de mise en oeuvre comprenant un circuit de libération à sous-tension pour déclencher le disjoncteur si une tension de commande chute sous un certain niveau de tension, **caractérisé en ce que** le circuit de libération à sous-tension est comme un circuit selon l'une quelconque des revendications 1 à 4.
